# EUROPEAN PATENT SPECIFICATION

(11) **EP 1 571 063 B1**
(45) Date of publication and mention of the grant of the patent: **09.07.2008**
(21) Application number: 05004372.8
(22) Date of filing: 28.02.2005
(51) Int. Cl.: B62D 1/19

(54) **Steering apparatus**
Lenkvorrichtung
Appareil de direction

(30) Priority: 04.03.2004 JP 2004060009; 29.09.2004 JP 2004285331
(43) Date of publication of application: 07.09.2005
(73) Proprietor: NSK Ltd., Shinagawa-ku Tokyo (JP); NSK Steering Systems Co., Ltd., Shinagawa-ku, Tokyo (JP)
(72) Inventor: Sadakata, Koyoshi, Maebashi-shi Gunma (JP); Komori, Hiromichi, Maebashi-shi Gunma (JP)
(74) Representative: Grünecker, Kinkeldey, Stockmair & Schwanhäusser Anwaltssozietät

(56) References cited:
- EP-A- 0 963 899
- WO-A-20/04000627
- US-A- 5 511 823
- US-A1- 2003 083 135
- PATENT ABSTRACTS OF JAPAN vol. 2002, no. 08, 5 August 2002 (2002-08-05) -& JP 2002 114155 A (NTN CORP), 16 April 2002 (2002-04-16)
- PATENT ABSTRACTS OF JAPAN vol. 1995, no. 08, 29 September 1995 (1995-09-29) -& JP 07 117687 A (KOYO SEIKO CO LTD; others: 01), 9 May 1995 (1995-05-09)

## Description

### BACKGROUND OF THE INVENTION

### Field of the Invention

The present invention relates to a steering apparatus, and more particularly to a steering apparatus which improves the safety of a driver during a secondary collision.

### Background Art

Conventionally, in a steering column apparatus for an automobile, a shaft for transmitting the rotation of a steering wheel to a steering gear in many cases cannot be disposed on a straight line, so that the rotation of the steering wheel is adapted to be transmitted to the steering gear through a universal joint.

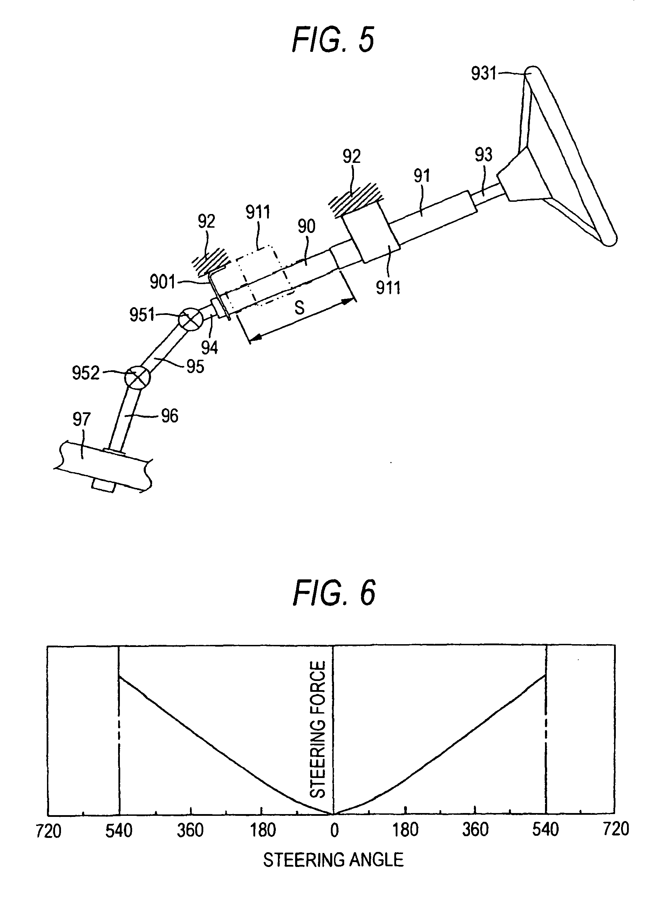

Fig. 5 shows a conventional steering column apparatus. As shown in Fig. 5, in the conventional steering column apparatus, an inner column (fixed column) 90 is fixed to a vehicle body 92 by means of a lower bracket 901. An outer column (moving column) 91 is fitted over an outer periphery of the inner column 90 so as to be axially slidable. The outer column 91 is mounted on the vehicle body 92 by means of an upper bracket 911 so as to be disengageable toward the front side of a vehicle body (leftward).

An upper steering shaft 93 is pivotally supported in the outer column 91, and a steering wheel 931 is fixed to a right end (vehicle-body rear side) of the upper steering shaft 93. A lower steering shaft assembly 94 is pivotally supported in the inner column 90. The lower steering shaft assembly 94 is spline fitted to the upper steering shaft 93, and the rotation of the upper steering shaft 93 is transmitted to the lower steering shaft assembly 94.

The left end of the lower steering shaft assembly 94 is coupled to an intermediate shaft 95 by means of a first cardan joint (spider universal joint) 951, while the left end of the intermediate shaft 95 is coupled to a pinion shaft 96 by means of a second cardan joint 952. The left end of the pinion shaft 96 is coupled to a steering gear 97, so that the rotation of the steering wheel 931 is transmitted to the steering gear 97, making it possible to change the steering angle of the wheels.

In the steering column apparatus using the conventional cardan joints shown in Fig. 5, if the angle of intersection between the lower steering shaft assembly 94 and the pinion shaft 96 is large, the variation of angular velocity becomes large, so that the variation of the angular velocity of the cardan joint as a single unit is offset by combining the two cardan joints 951 and 952.

With such a steering column apparatus, in the event that the driver collides against the steering wheel 931 during a secondary collision, the upper bracket 911 comes off the vehicle body 92 due to the impact of the collision, and the outer column 91 moves along the inner column 90 up to the position on the vehicle-body front side indicated by the two-dot chain line. By making use of a moving stroke (collapse stroke) S at this time, an unillustrated energy absorbing member is plastically deformed to absorb the impact energy of the collision, thereby alleviating the impact applied to the driver.

If a column assist-type electrical power assisting mechanism (electrical power steering) is installed on the inner column 90 of such a steering column apparatus, the distance between the electrical power assisting mechanism and the steering wheel 931 becomes short, so that the collapse stroke S becomes short. Hence, a drawback occurs in that it becomes impossible to sufficiently absorb the impact energy of the collision.

JP-A-7-117687 discloses a column assist-type electrical power steering apparatus in which the impact energy absorbing characteristic is improved. With the electrical power steering apparatus of JP-A-7-117687, the lower bracket to which the electrical power assisting mechanism is fixed is also adapted to be plastically deformed simultaneously with the disengagement of the upper bracket from the vehicle body during a secondary collision. Therefore, even if the collapse stroke S is short, the impact energy of the collision can be absorbed sufficiently.

Since the electrical power steering apparatus of JP-A-7-117687 has an easily plastically deformable lower bracket in which priority is placed on the absorption of the impact energy, the supporting strength of the lower bracket is insufficient. Hence, the stability during steering and a decline in the vibrational rigidity become problems. In addition, since the distance between the electrical power assisting mechanism and the steering wheel is short, it is difficult to adopt a telescopic mechanism and a tilt mechanism, particularly an oscillating tilt mechanism.

Furthermore, in order to allow the electrical power assisting mechanism and the telescopic and tilt mechanisms to be both present within a limited space, an electrical power assisting mechanism unit (EPS unit), particularly a motor, is required to be compact. However, if the motor is made compact, there is a problem in that it is essentially difficult to obtain a sufficient output.

In addition, as conventionally known as a characteristic of the steering system, it is known that the greater the steering angle, the more the output of the steering gear unit (in many passenger cars in recent years, the rack-and-pinion type is frequently used) is required. Fig. 6 shows the relationship between the rotational angle of the steering wheel and the steering force. The reason that the relationship between them becomes as such is as follows: Because the torque is obtained as the wheel rotates about a king pin, and the steering arm is rotated from a rack shaft of the rack and pinion through tie rods, in the vicinity of a maximum steering angle the output from the tie rods cannot be caused to act effectively in the tangential direction of the locus of rotation of the steering arm.

Furthermore, in the conventional intermediate shaft 95 shown in Fig. 5, in the case where the electrical power assisting mechanism is provided, unlike the case where power assist is not provided, the steering torque outputted to the lower steering shaft assembly 94 is made large due to the power assist. Therefore, a phase offset, though slight, occurs due to the twisting of the shaft portion of the intermediate shaft 95. Variations in torque occur due to this phase offset. Furthermore, insofar as the components are mechanical components, variations in torque similarly occur due to fabrication errors. It is virtually difficult to provide such a layout as to overcome these variations in torque.

Whether the variation in torque acts in the positive or negative direction at a maximum steering angle (normally, 1.5 turns or thereabouts) is impossible to predict due to a phase error of the yoke. However, in the case where the variation in torque acts positively, the variation in torque increases the output torque with respect to the input torque, whereas in the negative case the variation in torque decreases the output torque. Figs. 7 and 8 respectively show the relationship between the steering angle and the variations in torque in the case where the variation in torque acts positively, and the relationship between the steering angle and the steering force with these variations in torque superposed thereon. Similarly, the negative case is shown in Figs. 9 and 10.

Since designers must design the electrical power assisting mechanism unit on the premise of the worst conditions, the designers are inevitably compelled to adopt a large motor by taking into consideration the above-described unpredictable variations in torque in the cardan joint. Thus, how to overcome the mutually contradictory demands for the large motor and the limited space is a problem plaguing the designers.

In addition, JP-A-2002-114155 discloses a steering column apparatus in which the steering gear and the steering shaft are coupled by a single constant-velocity universal joint to absorb the impact energy during a primary collision. The steering column apparatus of JP-A-2002-114155 is so constructed that a pinion shaft is adapted to swing toward the driver's side about the universal joint during the primary collision. This steering column apparatus does not have a mechanism for absorbing the impact energy during the secondary collision (collapse mechanism) and is not provided with an electrical power assisting mechanism.

The document WO 2004/000627 A shows an electrical steering apparatus comprising the features of the preamble of claim 1.

### SUMMARY OF THE INVENTION

An object of the invention is to provide a column assist-type electrical power steering apparatus which makes it possible to provide a long collapse stroke during a secondary collision, facilitates the installation of a tilt mechanism and a telescopic mechanism, has high vibrational rigidity, and excels in steering stability, and which is compact and provides a high output.

The above-described problems are overcome by the steering apparatus according to claim 1.

In accordance with a second aspect of the invention, there is provided an electrical power steering apparatus further comprising:

a lower bracket for fixing the fixed column to a vehicle body; an upper bracket for mounting the moving column on the vehicle body movably toward a vehicle-body front side.

In accordance with a third aspect of the invention, there is provided an electrical power steering apparatus further comprising:
a lower bracket for fixing a vehicle-body front side of the fixed column to a vehicle body; an upper bracket for fixing a vehicle-body rear side of the fixed column to the vehicle body.

In accordance with a fourth aspect of the invention, in the electrical power steering apparatus according to any one of the first to third aspects of the invention, the constant-velocity universal joint and the steering gear are coupled by a bellows.

In accordance with a fifth aspect of the invention, in the electrical power steering apparatus according to any one of the first to fourth aspects of the invention, at least one of the adjustment of an angle of inclination of the steering wheel and the height adjustment thereof is made possible.

In the electrical power steering apparatus in accordance with the invention, since an output shaft of the electrical power assisting mechanism and the steering gear are coupled by a single constant-velocity universal joint, the lower bracket for installing the fixed column can be installed closer to the front side of the vehicle body, and the motor can be made compact. Therefore, the collapse stroke can be made long, thereby making it possible to sufficiently absorb the impact energy during a collision. In addition, since the distance between the electrical power assisting mechanism and the steering wheel can be made long, it is easily possible to incorporate a tilt mechanism and a telescopic mechanism.

Furthermore, since the fixed column having the electrical power assisting mechanism is firmly attached to the vehicle body by the lower bracket, the vibration is small, so that the steering stability improves. In addition, since the motor of the electrical power assisting mechanism and the reduction gear are located away from the driver, it is possible to secure a quiet driving environment.

### BRIEF DESCRIPTION OF THE DRAWINGS

The present invention may be more readily described with reference to the accompanying drawings:

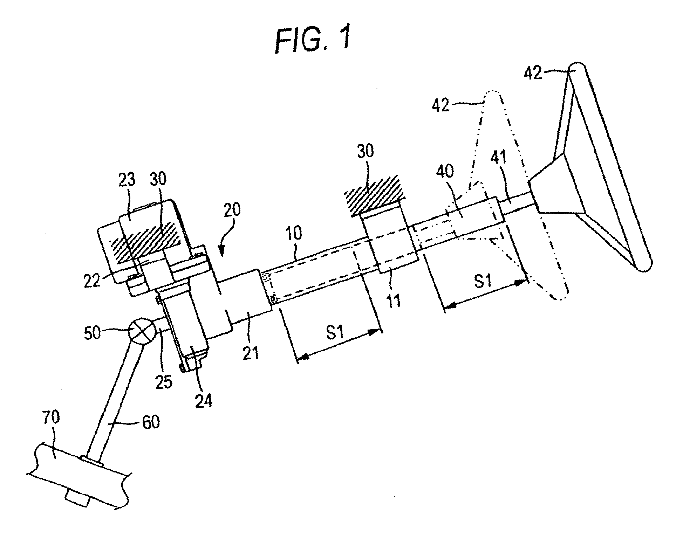

Fig. 1 is an outside drawing of an electrical power steering apparatus in accordance with a first embodiment of the invention;

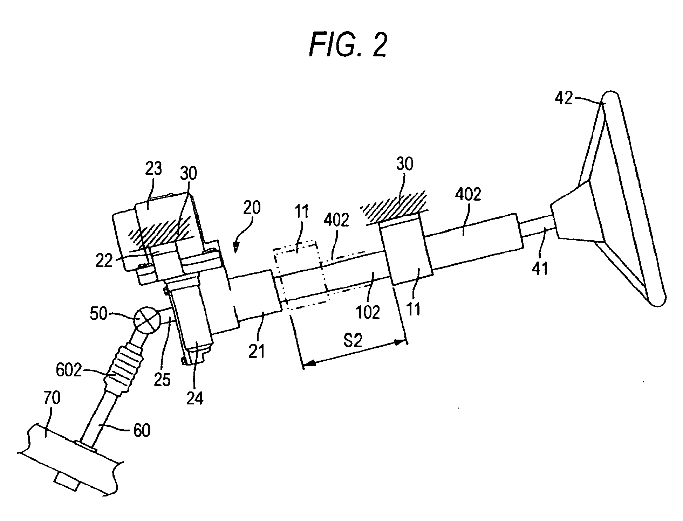

Fig. 2 is an outside drawing of the electrical power steering apparatus in accordance with a second embodiment of the invention;

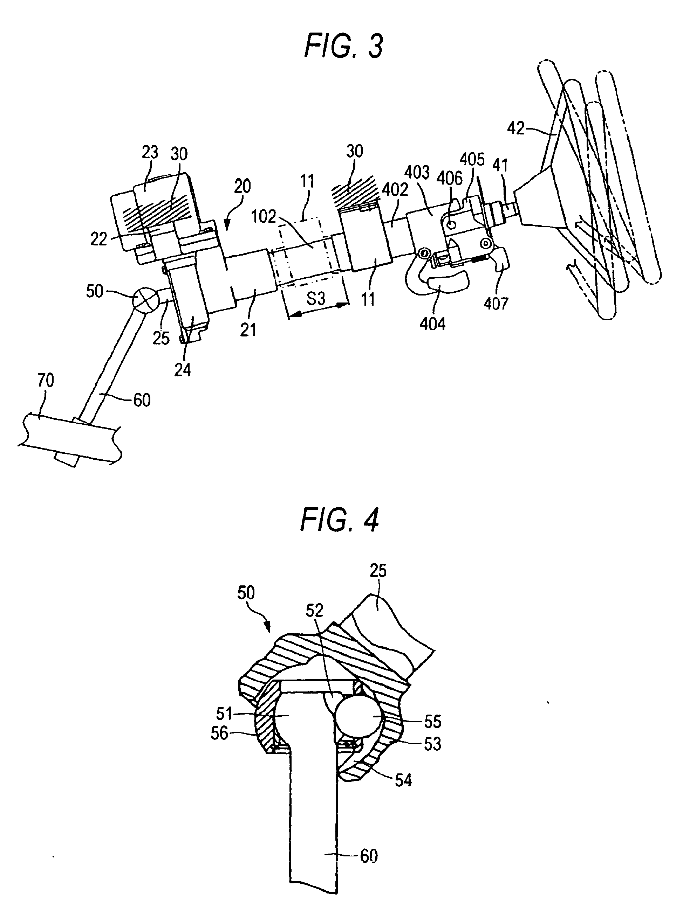

Fig. 3 is an outside drawing of the electrical power steering apparatus in accordance with a third embodiment of the invention;
Fig. 4 is a cross-sectional view of a constant-velocity universal joint used in the embodiments of the invention;
Fig. 5 is an outside drawing of a conventional steering column apparatus;
Fig. 6 is a graph illustrating the relationship between the rotational angle of a steering wheel and the steering force;

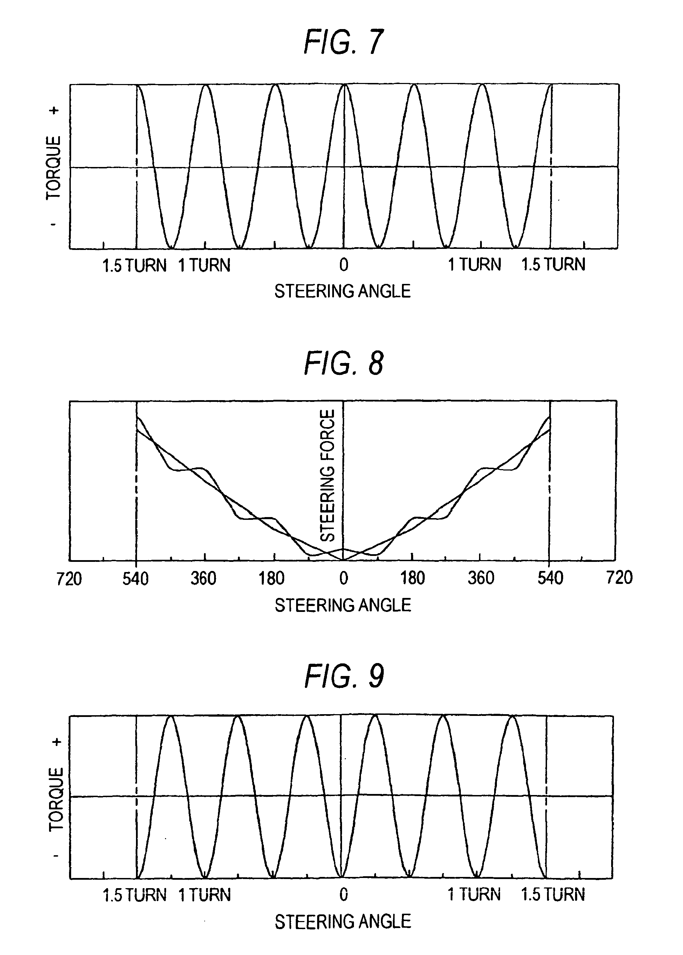

Fig. 7 is a diagram illustrating the relationship between the steering angle and variations in torque in a case where the variation in torque acts positively;
Fig. 8 is a diagram illustrating the relationship between the steering angle and the steering force with the variations in torque in Fig. 7 superposed thereon;
Fig. 9 is a diagram illustrating the relationship between the steering angle and the variations in torque in a case where the variation in torque acts negatively; and

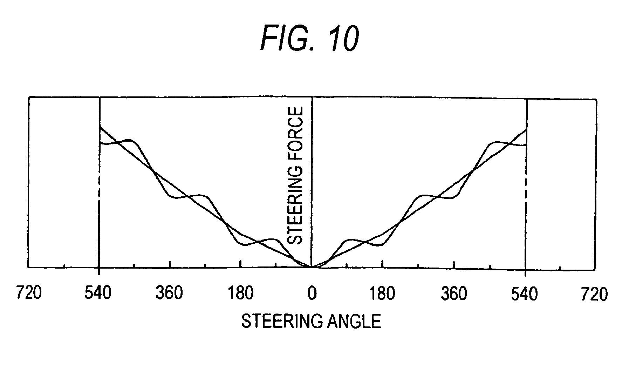

Fig. 10 is a diagram illustrating the relationship between the steering angle and the steering force with the variations in toque in Fig. 9 superposed thereon.

### DETAILED DESCRIPTION OF THE PREFERRED EMBODIMENTS

Referring now to the drawings, a description will be given of the embodiments of the invention.

### First Embodiment

Fig. 1 is an outside drawingof an electrical power steering apparatus in accordance with a first embodiment of the invention.

A housing 21 of an electrical power assisting mechanism (electrical power steering) 20 is installed on a vehicle-body front side (left-hand side) of an outer column (fixed column) 10. The electrical power assisting mechanism 20 includes an electric motor 23, a reduction gear box 24, an output shaft 25, and the like. This electrical power assisting mechanism 20 is fixed to a vehicle body 30 by means of a lower bracket 22 which is integral with the housing 21.

Meanwhile, an upper bracket 11 is installed on a vehicle-body rear side (right-hand side) of the outer column 10. The outer column 10 is fixed to the vehicle body 30 by this upper bracket 11. An inner column (movable column) 40 is fitted on an inner periphery of the outer column 10 so as to be axially slidable. An upper steering shaft 41 is pivotally supported in the inner column 40, and a steering wheel 42 is fixed to a right end (vehicle-body rear side) of the upper steering shaft 41.

When a driver collides against the steering wheel 42 during a secondary collision, and a large impact force is applied, the inner column 40 collapses toward the vehicle-body front side while being guided by the outer column 10 up to the position where a left end face of the inner column 40 abuts against a bearing on an inner periphery of a left end of the outer column 10. The inner column 40 thereby plastically deforms an unillustrated energy absorbing member and absorbs the impact energy. Although various mechanisms are known as the energy absorbing mechanism, it is preferable to adopt a system in which a moving side and a fixed side are slid relative to each other during collapsing, thereby allowing the impact energy to be absorbed by the frictional force or plastic deformation at the time of the sliding.

An unillustrated lower steering shaft assembly is pivotally supported in the outer column 10. The lower steering shaft assembly is spline fitted to the upper steering shaft 41, and the rotation of the upper steering shaft 41 is transmitted to the lower steering shaft assembly. The steering force of the steering shaft 41 transmitted to the lower steering shaft assembly is detected by an unillustrated torque sensor of the electrical power assisting mechanism 20. A steering assisting force corresponding to the magnitude of the detected torque is transmitted from the electric motor 23 to the reduction gear box 24, and is imparted to the output shaft 25.

A left end of the output shaft is coupled to a right end of a pinion shaft 60 by means of a single constant-velocity universal joint 50, while a left end of the pinion shaft 60 is coupled to a steering gear 70. The rotation of the steering wheel 42 is transmitted to the steering gear 70, making it possible to change the steering angle of the wheels.

Fig. 4 shows one example of the constant-velocity universal joint 50 used in the embodiment of the invention. A spherical inner coupling member 51 is integrally formed at the right end of the pinion shaft 60, and a ball guide groove 52 is formed in a spherical surface of this inner coupling member 51. An outer coupling member 53 having a spherical recess is integrally formed at a left end of the output shaft 25, and a ball guide groove 54 is formed in this recess. It should be noted that although a double cardan joint may be used as the constant-velocity universal joint, the constant-velocity universal joint shown in Fig. 4 is preferable in terms of space.

As a plurality of torque transmitting balls 55 are rollably fitted in these ball guide grooves 52 and 54, a torque is transmitted between the inner coupling member 51 and the outer coupling member 53. A ball retainer 56 having an inner surface complementary to the spherical surface of the inner coupling member 51 is rotatable about the center of the spherical surface of the inner coupling member 51 while retaining the torque transmitting balls 55.

If such a constant-velocity universal joint 50 is used singly for the coupling between the output shaft 25 of the electrical power assisting mechanism 20 and the pinion shaft 60, an intermediate shaft 95 described in the related art in Fig. 5 becomes unnecessary. Therefore, it becomes possible to dispose the electrical power assisting mechanism 20 closer to the vehicle-body front side, so that the distance between the electrical power assisting mechanism 20 and the steering shaft 42 becomes long. Hence, the collapse stroke S1 shown in Fig. 1 can be made long.

In addition, even if twisting occurs to the output shaft 25 and the pinion shaft 60 due to the torque power-assisted by the electrical power assisting mechanism, it becomes unnecessary to design under unfavorable conditions by taking into consideration the variations in torque in the conventional manner. The electrical power assisting mechanism unit including the motor can be made compact, and the length of the collapse stroke can be made long.

Accordingly, in the event that the driver collides against the steering wheel 42 during a secondary collision, the inner column 40 moves along the outer column 10 up to the position on the vehicle-body front side indicated by the two-dot chain line. Since the length of the moving stroke (collapse stroke) S1 at this time can be made sufficiently long, impact energy of the collision can be absorbed by plastically deforming the unillustrated energy absorbing member, making it possible to sufficiently alleviate the impact applied to the driver.

In addition, since the fixed column having the electrical power assisting mechanism is firmly attached to the vehicle body by the lower bracket, the vibration is small, so that the steering stability improves. Furthermore, since the motor of the electrical power assisting mechanism and the reduction gear are located away from the driver, it is possible to secure a quiet driving environment.

### Second Embodiment

Fig. 2 is an outside drawing of the electrical power steering apparatus in accordance with a second embodiment of the invention. In this second embodiment, the portion which collapses during a secondary collision differs from that of the first embodiment, and in this embodiment a bellows is added to the pinion shaft to alleviate the impact during a primary collision. Hereafter, portions identical to those of the first embodiment will be denoted by the same reference numerals.

The housing 21 of the electrical power assisting mechanism (electrical power steering) 20 is installed on the vehicle-body front side (left-hand side) of an inner column (fixed column) 102. The electrical power assisting mechanism 20 includes the electric motor 23, the reduction gear box 24, the output shaft 25, and the like. This electrical power assisting mechanism 20 is fixed to the vehicle body 30 by means of the lower bracket 22 which is integral with the housing 21.

An outer column (moving column) 402 is fitted over an outer periphery of the inner column 102 so as to be axially slidable. The upper bracket 11 is installed on the vehicle-body front side of the outer column 402. The outer column 402 is mounted on the vehicle body 30 by means of this upper bracket 11 so as to be disengageable toward the front side of the vehicle body.

The upper steering shaft 41 is pivotally supported in the outer column 402, and the steering wheel 42 is fixed to the right end (vehicle-body rear side) of the upper steering shaft 41. When the driver collides against the steering wheel 42 during a secondary collision, and a large impact force is applied, the upper bracket is disengaged from the vehicle body 30 toward the vehicle-body front side. Hence, the outer column 402 collapses toward the vehicle-body front side while being guided by the inner column 102, thereby absorbing the impact energy.

The unillustrated lower steering shaft assembly is pivotally supported in the inner column 102. The lower steering shaft assembly is spline fitted to the upper steering shaft 41, and the rotation of the upper steering shaft 41 is transmitted to the lower steering shaft assembly. The steering force of the steering shaft 42 transmitted to the lower steering shaft assembly is detected by the unillustrated torque sensor of the electrical power assisting mechanism 20. A steering assisting force corresponding to the magnitude of the detected torque is transmitted from the electric motor 23 to the reduction gear box 24, and is imparted to the output shaft 25.

The left end of the output shaft is coupled to the right end of the pinion shaft 60 by means of the single constant-velocity universal joint 50, while the left end of the pinion shaft 60 is coupled to the steering gear 70. The rotation of the steering wheel 42 is transmitted to the steering gear 70, making it possible to change the steering angle of the wheels. The pinion shaft 60 is coupled to the constant-velocity universal joint 50 by means of a bellows (bellows coupling) 602.

During a primary collision, the steering gear 70 and the pinion shaft 60 swing toward the vehicle-body rear side (rightwardly). If the single constant-velocity universal joint is used as in the embodiments of the invention, an allowable angle of intersection during the primary collision becomes smaller than the case where two cardan joints are used. However, since the bellows 602 is interposed between the constant-velocity universal joint 50 and the pinion shaft 60, the bellows 602 absorbs the swinging motion of the pinion shaft 60. Accordingly, even if the swinging motion of the pinion shaft 60 exceeds a maximum allowable angle of intersection of the constant-velocity universal joint 50, the steering wheel 42 which is higher than the constant-velocity universal joint 50 is prevented from swinging in such a manner as to be thrust upward. Hence, no adverse effect is exerted on the proper operation of an air bag.

Since the single constant-velocity universal joint 50 is used for the coupling between the output shaft 25 of the electrical power assisting mechanism 20 and the pinion shaft 60 in the same way as in the first embodiment, the conventional intermediate shaft 95 becomes unnecessary. Therefore, it becomes possible to dispose the electrical power assisting mechanism 20 closer to the vehicle-body front side, so that the distance between the electrical power assisting mechanism 20 and the steering shaft 42 becomes long. Hence, the collapse stroke S2 can be made long. Additionally, it becomes unnecessary to take into consideration the variations in torque.

Consequently, in the event that the driver collides against the steering wheel 42 during a secondary collision, the upper bracket 11 is disengaged from the vehicle body 30 due to the impact of the collision, and the outer column 402 moves along the inner column 102 up to the position on the vehicle-body front side indicated by the two-dot chain line. Since the length of the moving stroke (collapse stroke) S2 at this time can be made sufficiently long, impact energy of the collision can be absorbed by plastically deforming the unillustrated energy absorbing member, making it possible to sufficiently alleviate the impact applied to the driver.

### Third Embodiment

Fig. 3 is an outside drawing of the electrical power steering apparatus in accordance with a third embodiment of the invention. In this third embodiment, the collapsing portion differs from that of the first embodiment, and an oscillating tilt mechanism and a telescopic mechanism are added in this embodiment. Hereafter, portions identical to those of the first and second embodiments will be denoted by the same reference numerals.

The housing 21 of the electrical power assisting mechanism (electrical power steering) 20 is installed on the vehicle-body front side (left-hand side) of the inner column (fixed column) 102. The electrical power assisting mechanism 20 includes the electric motor 23, the reduction gear box 24, the output shaft 25, and the like. This electrical power assisting mechanism 20 is fixed to the vehicle body 30 by means of the lower bracket 22 which is integral with the housing 21.

The outer column (moving column) 402 is fitted over the outer periphery of the inner column 102 so as to be axially slidable. The upper bracket 11 is installed on the vehicle-body front side of the outer column 402. The outer column 402 is mounted on the vehicle body 30 by means of this upper bracket 11 so as to be disengageable toward the front side of the vehicle body (leftward).

When the driver collides against the steering wheel 42 during a secondary collision, and a large impact force is applied, the upper bracket is disengaged from the vehicle body 30 toward the vehicle-body front side. Hence, the outer column 402 collapses toward the vehicle-body front side while being guided by the inner column 102, thereby absorbing the impact energy.

A telescopic housing 4 03 is fitted over the outer periphery of the outer column 402 so as to be axially slidable. As a telescopic operation lever 404 is operated, it is possible to effect the operation of clamping and unclamping the telescopic housing 403 with respect to the outer column 402. Furthermore, a tilt bracket 405 is installed on the telescopic housing 403 tiltably about a tilt center axis 406 perpendicular to the plane of the drawing. As a tilt operation lever 407 is operated, it is possible to effect the operation of clamping and unclamping the tilt bracket 405 with respect to the telescopic housing 403. The upper steering shaft 41 is pivotally supported in the tilt bracket 405, and the steering shaft 42 is fixed to a right end (vehicle-body rear side) of the upper steering shaft 41.

If the telescopic housing 403 is unclamped with respect to the outer column 402 by operating the telescopic operation lever 404, and the telescopic housing 403 is slid with respect to the outer column 402, the heightwise position of the steering shaft 42 can be adjusted as shown by the two-dot chain line so as to be adjusted to the driver's physique. If the tilt bracket 405 is unclamped with respect to the telescopic housing 403 by operating the tilt operation lever 407, and the tilt bracket 405 is tilted with respect to the telescopic housing 403, the angular position of the steering shaft 42 can be adjusted as shown by the two-dot chain line so as to be adjusted to the driver's physique.

The unillustrated lower steering shaft assembly is pivotally supported in the inner column 102. The lower steering shaft assembly is spline fitted to the upper steering shaft 41, and the rotation of the upper steering shaft 41 is transmitted to the lower steering shaft assembly. The steering force of the steering shaft 42 transmitted to the lower steering shaft assembly is detected by the unillustrated torque sensor of the electrical power assisting mechanism 20. A steering assisting force corresponding to the magnitude of the detected torque is transmitted from the electric motor 23 to the reduction gear box 24, and is imparted to the output shaft 25.

The left end of the output shaft is coupled to the right end of the pinion shaft 60 by means of the single constant-velocity universal joint 50, while the left end of the pinion shaft 60 is coupled to the steering gear 70. The rotation of the steering wheel 42 is transmitted to the steering gear 70, making it possible to change the steering angle of the wheels.

In the event that the driver collides against the steering wheel 42 during a secondary collision, the upper bracket 11 is disengaged from the vehicle body 30 due to the impact of the collision, and the outer column 402 moves along the inner column 102 up to the position on the vehicle-body front side indicated by the two-dot chain line. Since the single constant-velocity universal joint is used in the same way as in the first embodiment, the length of the moving stroke (collapse stroke) S3 can be made sufficiently long. Hence, impact energy of the collision can be absorbed by plastically deforming the unillustrated energy absorbing member, making it possible to sufficiently alleviate the impact applied to the driver. In addition, since the distance between the electrical power assisting mechanism 20 and the steering shaft 42 can be made long, it becomes easily possible to adopt a telescopic mechanism and a tilt mechanism, particularly an oscillating tilt mechanism.

In addition, even if twisting occurs to the output shaft 25 and the pinion shaft 60 due to the torque power-assisted by the electrical power assisting mechanism, it becomes unnecessary to design under unfavorable conditions by taking into consideration the variations in torque in the conventional manner. The electrical power assisting mechanism unit including the motor can be made compact, and the length of the collapse stroke can be made long.

## Claims

1. An electrical power steering apparatus comprising:
a fixed column (10);
a bracket (11) for fixing the fixed column (10) to a vehicle body (30);
a moving column (40) fitted to the fixed column (10) movably in a longitudinal direction of the vehicle body (30);
an impact absorbing mechanism provided between the fixed column (10) and the moving column (40);
a steering shaft (41) pivotally supported by the moving column (40),
a steering wheel (42) being fixed to a vehicle-body rear side of the steering shaft (41); and
an electrical power assisting mechanism (20) provided on the fixed column (10) and adapted to assist a steering force of the steering wheel (42),
**characterized by**
a single constant-velocity universal joint (50) for coupling an output shaft (25) of the electrical power assisting mechanism and a steering gear (70).

2. An electrical power steering apparatus according to claim 1, **characterized in that**
said bracket is a lower bracket (22) for fixing the fixed column to a vehicle body; and
said apparatus further comprises an upper bracket for mounting the moving column on the vehicle body movably toward a vehicle-body front side.

3. An electrical power steering apparatus according to claim 1, **characterized in that**
said bracket is a lower bracket (22) for fixing a vehicle-body front side of the fixed column to a vehicle body; and
said apparatus further comprises an upper bracket for fixing a vehicle-body rear side of the fixed coiumn to the vehicle body.

4. The electrical power steering apparatus according to any of claims 1 to 3, wherein the constant-velocity universal joint and the steering gear are coupled by a bellows.

5. The electrical power steering apparatus according to any of claims 1 to 4, wherein at least one of the adjustment of an angle of inclination of the steering wheel and the height adjustment thereof is made possible.

## Patentansprüche

1. Elektrische Servolenkvorrichtung, die umfasst:
eine feststehende Säule (10);
eine Halterung (11) zum Befestigen der feststehenden Säule (10) an einer Fahrzeugkarosserie (30);
eine bewegliche Säule (40), die in einer Längsrichtung der Fahrzeugkarosserie (30) beweglich in die feststehende Säule (10) eingesetzt ist;
eine Aufprall-Dämpfmechanismus, der zwischen der feststehenden Säule (10) und der beweglichen Säule (40) vorhanden ist;
eine Lenkwelle (41), die von der beweglichen Säule (40) schwenkbar getragen wird, ein Lenkrad (42), das an der Fahrzeugkarosserie-Rückseite der Lenkwelle (41) befestigt ist; und
einen elektrischen Servounterstützungsmechanismus (20), der an der feststehenden Säule (10) vorhanden und so eingerichtet ist, dass er eine Lenkkraft des Lenkrades (42) unterstützt,
**gekennzeichnet durch**
ein einzelnes Konstantgeschwindigkeits-Universalgelenk (50), das eine Ausgangswelle (25) des elektrischen Servounterstützungsmechanismus mit einem Lenkgetriebe (70) verbindet.

2. Elektrische Servolenkvorrichtung nach Anspruch 1, **dadurch gekennzeichnet, dass**
die Halterung eine untere Halterung (22) zum Befestigen der feststehenden Säule an einer Fahrzeugkarosserie ist; und
die Vorrichtung des Weiteren eine obere Halterung umfasst, mit der die bewegliche Säule auf die Fahrzeugkarosserie-Vorderseite zu beweglich an der Fahrzeugkarosserie angebracht ist.

3. Elektrische Servolenkvorrichtung nach Anspruch 1, **dadurch gekennzeichnet, dass**
die Halterung eine untere Halterung (22) zum Befestigen einer Fahrzeugkarosserie-Vorderseite der feststehenden Säule an einer Fahrzeugkarosserie ist; und
die Vorrichtung des Weiteren eine obere Halterung zum Befestigen einer Fahrzeugkarosserie-Rückseite der feststehenden Säule an der Fahrzeugkarosserie umfasst.

4. Elektrische Servolenkvorrichtung nach einem der Ansprüche 1 bis 3, wobei das Konstantgeschwindigkeits-Universalgelenk und das Lenkgetriebe durch einen Balg verbunden sind.

5. Elektrische Servolenkvorrichtung nach einem der Ansprüche 1 bis 4, wobei wenigstens die Einstellung eines Neigungswinkels des Lenkrades oder die Höheneinstellung desselben möglich sind.

## Revendications

1. Dispositif de direction assistée électrique comprenant :
une colonne fixe (10) ;
un support (11) pour fixer la colonne fixe (10) sur une carrosserie de véhicule (30) ;
une colonne mobile (40) montée sur la colonne fixe (10) de manière mobile dans une direction longitudinale de la carrosserie de véhicule (30) ;
un mécanisme d'absorption d'impact placé entre la colonne fixe (10) et la colonne mobile (40) ;
un arbre de direction (41) supporté à pivotement par la colonne mobile (40),
un volant de direction (42) fixé sur un côté à l'arrière de la carrosserie de véhicule de l'arbre de direction (41) ; et
un mécanisme d'assistance électrique (20) placé sur la colonne fixe (10) et adapté pour assister une force directrice du volant de direction (42),
**caractérisé par**
un seul joint universel homocinétique (50) pour coupler un arbre de sortie (25) du mécanisme d'assistance électrique et un boîtier de direction (70).

2. Dispositif de direction assistée électrique selon la revendication 1, **caractérisé en ce que**
ledit support est un support inférieur (22) pour fixer la colonne fixe sur une carrosserie de véhicule ;
et
ledit dispositif comprend en outre un support supérieur pour monter la colonne mobile sur la carrosserie de véhicule de manière mobile vers un côté à l'avant de la carrosserie de véhicule.

3. Dispositif de direction assistée électrique selon la revendication 1, **caractérisé en ce que**
ledit support est un support inférieur (22) pour fixer un côté à l'avant de la carrosserie de véhicule de la colonne fixe sur une carrosserie de véhicule ; et
ledit dispositif comprend en outre un support supérieur pour fixer un côté à l'arrière de la carrosserie de véhicule de la colonne fixe sur la carrosserie de véhicule.

4. Dispositif de direction assistée électrique selon l'une quelconque des revendications 1 à 3, dans lequel le joint universel homocinétique et le boîtier de direction sont couplés par un soufflet.

5. Dispositif de direction assistée électrique selon l'une quelconque des revendications 1 à 4, dans lequel au moins l'un de l'ajustement d'un angle d'inclinaison du volant de direction et de l'ajustement de la hauteur de celui-ci est rendu possible.
